# EUROPEAN PATENT APPLICATION

(11) **EP 1 281 423 A1**
(43) Date of publication of application: **05.02.2003**
(21) Application number: 02078071.4
(22) Date of filing: 26.07.2002
(51) Int. Cl.: B01D 17/022, C02F 1/28, C02F 1/40, C02F 9/00, B01J 20/32, B01D 15/00, C02F 1/68

(54) **Method and device for absorbing hydrophobic material from a fluid, water purification system and washing device**

(30) Priority: 27.07.2001 NL 1018653
(71) Applicant: Dutch Electric Agency, 2761 JP Zevenhuizen (NL)
(72) Inventor: Van Der Meer, Herman, 3962 BD Wijk bij Duurstede (NL)
(74) Representative: Volmer, Johannes Cornelis

(57) **Abstract**

The invention pertains to a method for absorbing hydrophobic compounds from a fluid, wherein a fluid containing hydrophobic compounds is contacted with a porous material (2) comprising perlite, wherein the perlite is siliconized and expanded thereafter. The porous material has a remarkably high maximum degree of absorption. The invention also pertains to a device that comprises, apart from the previously mentioned porous material, an envelope for the porous material which is permeable to the hydrophobic compounds containing fluid. Additionally the invention pertains to a water purification system comprising a container (10) inside of which at least one device according to the invention is integrated and onto which system means for feeding the fluid and means for draining the fluid are attached.

## Description

The invention pertains to a method for absorbing hydrophobic compounds from a fluid wherein said hydrophobic compounds containing fluid is contacted with a porous material comprising perlite.

Such a method is known from US-A-5 632 889 in which the use of perlite is disclosed for selectively absorbing hydrocarbons from water. The perlite is herein transferred in the form of particles into a container, which container is disposed in a water drain. The perlite is before use expanded and thereafter siliconized. The container permits an easy removal of the perlite from the water drain, when it has absorbed its maximum amount of hydrocarbons, and an easy disposal thereafter. Optionally, a new amount of perlite may be transferred into the container next. According to this patent the perlite has a maximum degree of absorption that equals a few times its own weight.

With regard to this method, there is a need to expand the maximum degree of absorption of the perlite, so that an extended service life per amount of perlite is achieved.

The present invention has the object to fulfill this need.

In the method of the type mentioned in the preamble, the perlite according to the invention, is thereto siliconized and expanded thereafter. Perlite produced in this manner, shows surprisingly a higher maximum degree of absorption than is known in the art. An example of such a perlite is commercially available as material for isolation via PULL B.V. in Veenendaal, the Netherlands. A maximum degree of absorption by this perlite has for example been measured of approximately 50 vol.%. Such a high degree of maximum absorption obviously extends the service life of a given amount of perlite to a considerable extent, or - vice versa - lowers the weight of perlite that is needed for a given amount of hydrophobic compounds to be absorbed. The perlite that is applied in the method according to the invention, can for example be obtained by treating the perlite with an aqueous emulsion of silicones, leading to its surface acquiing hydrophobic properties, and an expansion thereafter through heating of the treated perlite. This manner of expanding and siliconizing of perlite is known in the art, for example from GB 1,096,420, wherein however, the perlite is expanded at firstly and siliconized thereafter.

Preferably, a perlite is used in the method according to the invention which has a maximum degree of absorption that is above 30 vol.%. Such a maximum degree of absorption is above the level known in the art. Advantageously, the perlite has a maximum degree of absorption between 30 and 60 vol.%, more advantageously around 50 vol.%. The specific weight of the perlite with such a maximum degree of absorption that has reached its maximum degree of absorption will still be below the specific weight of water. The specific weight of perlite that is first expanded and siliconized thereafter equals for instance approximately 0.090 kg/litre. Such a specific weight in combination with a maximum degree of absorption between 30 and 60 vol.% is advantageous to the use of perlite during the treatment of water flows, as the perlite will be floating upon the water at all times and is therefore easily removed after use.

Preferably, the method according to the invention comprises determining the degree of absorption of the perlite. By determining the degree of absorption during the process of absorption, one can prevent fluids containing hydrophobic compounds from being led over perlite at a moment when the absorption by perlite has become insufficient.

It is particularly preferable to determine the degree of absorption by the perlite by a degree of colouring of the perlite, which colouring is dependent on the degree of absorption and is observed visually. Such a visual observation is more convenient in operation than for instance, a weighing of the perlite.

Advantageously, in the method according to the invention, perlite is applied that is in the form of particles of such dimensions, that the particles of perlite form a stable, disperse phase in the fluid. The perlite as such has a high effective surface. In addition, a stable disperse phase of particles of perlite results in a stable progress of the absorption process as well as for a rheology of the fluid which is highly predictable. This is advantageous in the sense that the diffusion of the hydrophobic compounds containing fluid progresses more rapidly and will be better predictable, leading towards a better assessable progress of the absorption process.

Advantageously, the method according to the invention is applied for absorbing hydrocarbons from water.

Also, the invention pertains to a device for absorbing hydrophobic compounds from a fluid, comprising an envelope which is permeable to said hydrophobic compounds containing fluid and inside of which envelope a porous material is present that comprises perlite, wherein the perlite is siliconized and expanded thereafter. The device has the advantage that the perlite according to the invention is not freely dispersed upon or in the fluid, making the recovery more simple. Such a device is particularly suitable for absorbing hydrophobic compounds from fluids that by their nature are difficult to conduct as a liquid flow, such as for example in the case when fighting pollutions in moving open water as the result of leakages.

Preferably, the device according to the invention comprises a perlite with a maximum degree of absorption above 30 vol.%. Advantageously, the perlite has a maximum degree of absorption between 30 and 60 vol.%, more advantageously around 50 vol.%. It is hereby noted that the envelope can be designed in such a way that it does not substantially effect the specific weight of the total device, or can even lower it. The device thus provides the same advantages as previously specified with regard to the method.

Preferably the device according to the invention contains perlite which has a degree of colouring that is visually detectable and that is dependent on the amount of hydrophobic compounds that are absorbed, for the same reasons as already mentioned in regard of the method.

In a preferred embodiment of the invention, the device comprises an envelope for perlite in the form of a bag or box. In this manner the appropriate amount of perlite can be dosed dependent on the amount of hydrophobic compounds to be absorbed. Furthermore, the bags can be designed in such a way that they can be linked together in a circle surrounding a pollution spot on water. Both types of envelopes are beneficially applied to water purification systems such as described hereinafter, wherein the flow of the fluid is guided. Boxes can herein advantageously be designed in such a way that they are easily arranged and replaced in water purification systems.

Also, the invention pertains to a water purification system for purifying water or aqueous liquid comprising a flow-through chamber having an entrance and an exit, wherein at least one device according to the invention such as herein described, is integrated inside the flow-through chamber. Accordingly, the device according to the invention is used in this water purification system for purifying water or aqueous liquid of which the flow is conducted by means of a entrance and an exit along the device, which is beneficial because the flow is being purified in a central place, irrespectively of the location of the pollution. Furthermore, the system offers the same advantages as mentioned in regard of the device.

For example, such a water purification system can be applied advantageously in purifying waste stream water in agriculture, in particular waste stream water from troughs and silos.

Preferably, the water purification system according to the invention comprises a container arranged inside the flow-through chamber in between its entrance and its exit. The container permits the arrangement of the device in a fixed position, such that a forced flow of the fluid through the perlite is achieved. Advantageously the positioning of the container is such that there is plenty of contact between the fluid and the perlite with regard to the absorption process. Thus an excellent absorbing effect by the system is obtained. In addition the fixed positioning of the device permits a simple arrangement and removal thereof. Furthermore, the positioning can be chosen in a way that is the most convenient for observing the degree of absorption by the perlite.

Preferably the water purification system according to the invention comprises an entrance that is below the exit. In this way the number of particles in the fluid that land on the perlite and possibly choke the perlite, is minimized as much as possible because of gravity induced sedimentation.

A preferred embodiment of a water purification system according to the invention comprises the following units that are sequentially connected to each other: a sedimentation unit for sedimenting of solid particles present in said fluid, an absorption unit comprising the flow-through chamber, an oxidation unit for oxidizing retaining contaminants present in said fluid, an aeration unit for aerating the fluid as well as for lowering the surface tension of the fluid and a filtration unit for filtering said fluid.

Combining these sequentially connected units provides advantageously a water purification process wherein apart from hydrophobic compounds, also non-hydrophobic compounds as well as other unwanted properties of the fluid are taken away. For example, the sedimentation unit achieved that pollution in the form of particles having a higher specific weight than water, is being separated before the fluid reaches the absorption unit. The oxidation unit executes an oxidation of retaining contaminants in the fluid in a biological manner. The aeration unit for aerating the fluid as well as for lowering the surface tension of the fluid, is advantageously arranged in a buffering room for the fluid so that a part of the fluid is circulated continuously through the aeration unit. The filtration unit finally, is for example provided with a regenerable microfilter. The waste stream resulting from the regeneration of the filter can optionally be processed using the previously mentioned sedimentation unit.

The invention further pertains to a washing device for washing objects with water or aqueous liquid, provided with an entrance for washing water and an exit for washing water, wherein the exit for washing water is connected to the water purification system according to the invention as described earlier. The exit for washing water is herein connected to, dependent on the embodiment, the entrance to the flow-through chamber, or to a main entrance for the sequentially connected units of the water purification system. Such a washing device has the advantage that polluted waste stream directed into the environment is avoided. In addition, it is possible, dependent on the degree of purification, to re-use the water for various applications.

Preferably the washing device according to the invention has an entrance for washing water that is connected to the water purification system. The entrance for washing water is for that reason connected to, dependent on the embodiment, the exit of the flow-through chamber, or to a main exit of the sequentially connected units of the water purification system. In this way it is advantageously achieved that the water or the aqueous liquid that is used in the washing device, is not only cleaned but is also being reused in the same washing device in a cyclic manner. A washing device having a minimum consumption of fresh water is thereby provided. Such a washing device includes for example a car wash for vehicles.

The invention is illustrated hereinafter by the attached drawing wherein:

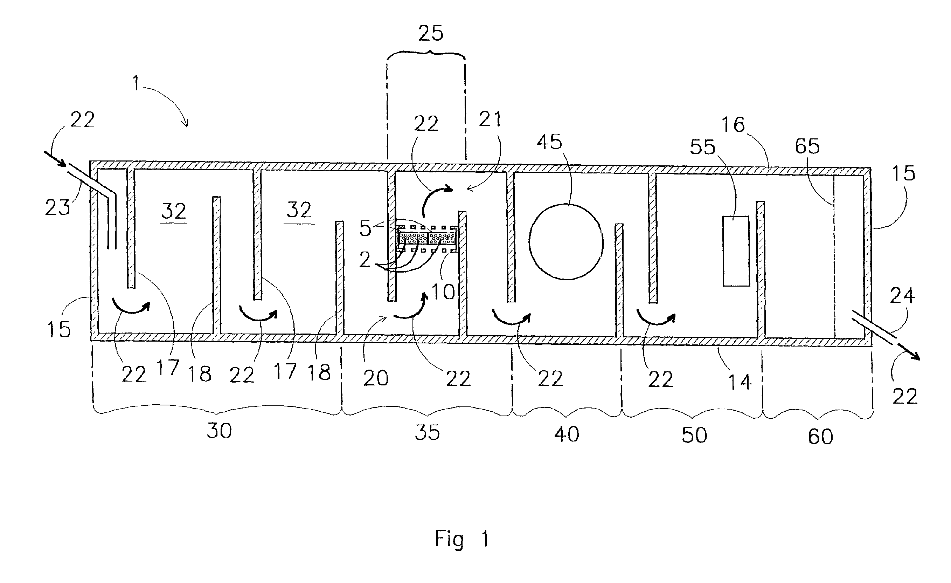

Figure 1 represents schematically an embodiment of the water purification system according to the invention.

Figure 1 shows schematically an embodiment of the water purification system for purifying water or aqueous liquid according to the invention, wherein different units are successively flown through with water to be purified. The units are linked to each other together forming a tank 1 that is constituted of walls of water-repellent material, namely a bottom wall 14, vertical side walls 15, a top wall 16 and internal walls 17 and 18 which function as partitions that conduct the water flow. The internal walls 17 are attached to the top wall 16, thereby leaving an opening between the free end of each internal wall 17 and the bottom wall 14. The internal walls 18 are attached to the bottom wall 14, thereby leaving free an opening between the free end of each internal wall 18 and the top wall 16. The water is conducted to the system through a main entrance 23 and is led away through a main exit 24. The system comprises the following units: a sedimentation unit 30 for sedimenting of solid particles present in the water, an absorption unit 35 for absorbing hydrophobic contaminants from the water, an oxidation unit 40 for oxidizing retaining contaminants in the water, a buffering room 50 comprising an aeration unit for aerating the fluid as well as for lowering the surface tension of the fluid, and a filtration unit 60 for filtering the water. The direction of the water flow is indicated by arrows 22.

The sedimentation unit 30 comprises two internal walls 17 and two internal walls 18 that are disposed in such a manner that a water flow is achieved into the sedimentation chambers 32 from below. These embodiments are per se generally known in the art and require no further explanation. The sedimentation unit is also provided with a main entrance 23 for the water to be cleaned.

The absorption unit 35 comprises a flow-through chamber 25 that is provided with a lower entrance 20 and an upper exit 21 as a result of the arrangement of the two comprised internal walls 17 and 18, wherein a container 10 is disposed between said entrance 20 and said exit 21, and is attached to the internal walls 17 and 18. In the container 10 two boxes 5 filled with porous material 2 are placed. The porous material 2 comprises perlite which is at first siliconized and expanded thereafter. The boxes 5 fill up the free space confined by the container in such a way that the water flows through the boxes filled with perlite. For completeness' sake it is remarked that the water in flow-through chamber 25 is flowing in an upward direction.

The oxidation unit 40 is provided with a biological reactor 45 for biologically oxidizing retaining contaminants in the water. The biological reactor 45 is schematically shown as a drum.

The buffering room 50 for the water is provided with an aeration unit 55 for aerating the water and lowering the surface tension of the water.

The filtration unit 60 finally, is provided with a schematically shown regenerable microfilter 65. The filtration unit comprises a main exit 24 as well.

## Claims

1. Method for absorbing hydrophobic compounds from a fluid, wherein the hydrophobic compounds containing fluid is contacted with a porous material comprising perlite, **characterized in that** the perlite is siliconized and expanded thereafter.

2. Method according to claim 1, **characterized in that** the perlite has a maximum degree of absorption that is above 30 percent by volume.

3. Method according to one of the preceding claims, **characterized in that** the degree of absorption of the perlite is being determined.

4. Method according to claim 3, **characterized in that** the degree of colouring of the perlite, the degree being dependent on the degree of absorption of the perlite, is observed visually.

5. Device for absorbing hydrophobic compounds from a fluid, said device comprising an envelope that is permeable to said hydrophobic compounds containing fluid, the inside of the envelope containing a porous material comprising perlite, **characterized in that** the perlite is siliconized and expanded thereafter.

6. Device according to claim 5, **characterized in that** the perlite has a maximum degree of absorption that is above 30 percent by volume.

7. Device according to one of the preceding claims 5-6, **characterized in that** the perlite has a degree of colouring that is dependent on the degree of absorption of the perlite, the degree of colouring being visually detectable.

8. Device according to one of the preceding claims 5-7, **characterized in that** the envelope comprises a bag or box (5).

9. Water purification system for purifying water or an aqueous liquid, comprising a flow-through chamber having an entrance and an exit, **characterized in that** at least one device according to one of the preceding claims 5-8 is integrated inside said flow-through chamber (25) in between its entrance (20) and its exit (21).

10. Water purification system according to claim 9, **characterized in that** a container (10) for the device is arranged inside the flow-through chamber (25) in between its entrance (20) and its exit (21).

11. Water purification system according to one of the preceding claims 9-10, **characterized in that** the entrance (20) is below the exit (21).

12. Water purification system according to one of the preceding claims 9-11, **characterized in that** the water purification system comprises the following units that are sequentially connected to each other: a sedimentation unit (30) for sedimenting solid particles present in said fluid, an absorption unit (35) that comprises the flow-through chamber (25) according to one of the preceding claims 9-11, an oxidation unit (40) for oxidizing retaining contaminants present in said fluid, an aeration unit (50) for aerating the fluid as well as for lowering the surface tension of the fluid and a filtration unit (60) for filtering said fluid.

13. Washing device for washing objects with water or an aqueous liquid, said device comprising an entrance for washing water and an exit for washing water, **characterized in that** the exit for washing water is connected to the water purification system according to one of the preceding claims 9-12.

14. Washing device for washing objects with water or an aqueous liquid according to claim 13, **characterized in that** the entrance for washing water is connected to the water purification system according to one of the preceding claims 9-12.
